(19)

Europäisches
Patentamt

European
Patent Office

Office européen
des brevets

(11) **EP 4 781 837 A1**

(12) **EUROPEAN PATENT APPLICATION**

(43) Date of publication:
**29.07.2026 Bulletin 2026/31**

(21) Application number: **26153731.0**

(22) Date of filing: **23.01.2026**

(51) International Patent Classification (IPC):
*A23K 10/20* [(2016.01)]    *A23K 10/35* [(2016.01)]
*A23K 10/37* [(2016.01)]    *A23K 40/10* [(2016.01)]
*A23K 40/25* [(2016.01)]    *A23K 40/30* [(2016.01)]
*A23K 50/80* [(2016.01)]

(52) Cooperative Patent Classification (CPC):
**A23K 50/80; A23K 10/20; A23K 10/35;
A23K 10/37; A23K 40/10; A23K 40/25; A23K 40/30**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **24.01.2025 EP 25153927**

(71) Applicants:
• **Justus-Liebig-Universität Gießen,
Körperschaft des öffentlichen Rechts
35390 Gießen (DE)**
• **Fraunhofer-Gesellschaft zur Förderung
der angewandten Forschung e.V.
80686 München (DE)**

(72) Inventors:
• **Wilke, Thomas
35392 Gießen (DE)**
• **Barth, Annalena
35415 Pohlheim (DE)**
• **Kreft, Daniel
35392 Gießen (DE)**
• **Schubert, Patrick
35418 Buseck (DE)**
• **Bendag, Slim
35392 Gießen (DE)**
• **Klüber, Patrick
61130 Nidderau (DE)**
• **Tegtmeier, Dorothee
35037 Marburg (DE)**

(74) Representative: **Stumpf, Peter
c/o TransMIT GmbH
Kerkrader Strasse 3
35394 Gießen (DE)**

(54) **INSECT FEEDS BASED ON PLANT BY-PRODUCTS FOR AQUACULTURE**

(57) Method for rearing *Hermetia* larvae on sustainable plant by-products (e.g., cocoa bean shells and/or apple pomace and/or depectinized apple pomace and/or potato peelings) to produce *Hermetia* larvae with a defined and consistent fat and protein content, producing meals from the larvae, using a single meal type or a targeted combination of meal types to produce pelleted feeds that meet the exact species- and life stage-specific fat and protein requirements of aquaculture species, thereby meeting 50-100% of the protein and fat requirements and replacing 75-100% of the amount of unsustainable fishmeal in pelleted aquaculture feeds by meal(s) of *Hermetia* larvae reared on these plant by-products.

EP 4 781 837 A1

## Description

The invention relates to insect meal feeds based on plant by-products to meet the individual protein and fat requirements of aquaculture species. A pathway to sustainable aquaculture feed in a circular economy is provided from plant by-products to insects to crustaceans and fish.

## Description

### Field of the invention

Many aquaculture practices, such as shrimp farming, often have a large environmental footprint, partly due to the fishmeal content of commercial shrimp feeds. One potential way to improve ecological sustainability would be to replace fishmeal-based compounds in shrimp feeds with insect-based compounds, such as black soldier fly (BSF; *Hermetia illucens* s.l.) larvae reared on plant by-products. However, little is known about the effects of these novel plant-based feeds on the growth characteristics of BSF larvae (BSFL) and how these in turn affect aquaculture species, including Pacific white shrimp (PWS; *Penaeus vannamei*). Therefore, the general goal of a study, which lead to the invention revealed herein, was to evaluate the suitability of BSFL reared on three common plant by-products (cocoa bean shells, apple pomace/depectinized apple pomace, and potato peelings) as a feed component for PWS aquaculture based on randomized controlled feeding trials. The study showed that both the nutritional profiles of the exemplarily tested feeds and the profiles of the BSFL reared on these feeds differed, particularly in crude protein and crude fat content. All BSF reared on the plant by-products showed lower growth performance than those reared on a control feed, possibly due to the presence of toxins and insecticides, and a low content of some essential amino acids. However, no significant differences in growth parameters were found between PWS fed BSFL reared on plant by-products and the control feed. Possibly, BSF do not bioaccumulate the toxins/insecticides present in the plant by-products and/or partially compensate for amino acid deficiencies. PWS fed BSFL reared on plant by-products had feed conversion ratios ranging from 0.8 to 1.0. These excellent values may fully or partially compensate for the lower growth performance of the BSFL reared on these by-products. This study is of economic importance for future shrimp aquaculture, confirming that BSF can be a central link in the transformation of low-cost plant by-products into high-quality protein sources for sustainable shrimp farming in a circular economy.

This previous study (A. Barth et al., "Broad acceptance of sustainable insect-based shrimp feeds requires reproducible and comparable research", Aquaculture Inernational (2025) 33:101) reveals scientific findings about nutrition of aquaculture species with BSF larvae, but is not revealing the invention nor even pointing to it:

This study is only revealing the feeding of complete BSF-larvae (being cut into pieces) to Pacific white shrimp (PWS) for the purpose of investigation of the most relevant parameters for growth of PWS by way of BSF-based feeding trials. There is no intention within this study to produce aquaculture feed for commercial growth of PWS. The substrate for rearing the BSF-larvae used in this previous study is a mixture of 90 % rye and 10 % wheat bran (standard chicken feed) and only two days before harvesting, apple pomace was co-fed in order to reduce the odor of ammonia and improve the acceptance of the feed by the PWS. Thus, the purpose of applying apple pomace within this previous study is a completely different one, and it is also not part of the basic growth substrate for rearing. The whole subject-matter of this previous study is confined to the usage of thawed and cut BSF-larvae, being conventionally reared, and provides no hint for producing different BSF-larvae meals and admixing them in order to achieve a desired composition with respect to protein-content and fat-content. Thus, this previous study is not teaching the substitution of fishmeal by BSF-meal, but the co-feeding of BSF larvae and commercial pelleted aquaculture feeds.

### Background of the technology

As oceans become increasingly overfished, marine aquaculture offers an alternative to fishing. However, many aquaculture practices, such as shrimp farming, are ecologically unsustainable. In particular, the production of shrimp feed has a large environmental footprint. This is partly due to the fishmeal content of commercial shrimp diets. Fishmeal production is often associated with overfishing of fish species, the prevalence of foodborne marine pathogens, and high $CO_2$ emissions associated with transportation. Therefore, the development of responsible and environmentally friendly feed practices is key to sustainable shrimp aquaculture.

In commercial aquaculture of crustaceans and fish, species-specific feeds are used to meet the special nutritional requirements of individual species. Pelleted feeds are the most commonly used. These consist of optimized mixtures of raw materials such as fish and/or vegetable meals, fish and/or vegetable oils as well as vitamins and trace elements. However, these pelleted feeds contribute significantly to the large ecological footprint of aquaculture. A major factor is the high proportion of fishmeal and fish oil in the feed. Fishmeal is made from wild-caught fish, which contributes to overfishing and puts pressure on marine ecosystems. In addition, the production of fishmeal and fish oil is energy intensive

and causes high $CO_2$ emissions.

The sustainability problem also applies to other animal-based ingredients (e.g. poultry blood meal) and even some plant ingredients (e.g. soy protein and palm oil) in the feed. The development of alternative feeds by avoiding non-sustainable ingredients (especially to meet protein and fat requirements) is therefore an essential key to achieve sustainable aquaculture of crustaceans and fish.

Scientists are therefore working to replace fishmeal-based compounds in aquaculture feeds with insect-based compounds such as fresh larvae or larval meal from the BSF. Many characteristics of the BSF, such as its rapid reproductive rate, low risk of disease transmission, and versatility in feed utilization, high protein content, amino acid profile largely comparable to fishmeal, potential for vertical farming, short production cycle, and possibility of local rearing, make it an attractive candidate for fishmeal replacement. In addition, BSF contain antimicrobial peptides and chitin that may induce beneficial immune responses in the target species.

On the other hand, the highly variable protein content of BSF meal, depending on the growth conditions, makes it difficult to achieve a BSF meal with suitable protein content for a certain aquaculture species and was therefore heretofore considered as a hindrance for applying BSF meal. Thus, BSF meal was up to date only applicable for feeding single explicitly chosen species and not applicable in broad scope, for - as is well known - every aquaculture species requires a certain species-specific protein content, so that findings with respect to one species cannot be applied to another species. Even the possibility of the use of a BSF-meal for feeding a certain species at a certain development status cannot be applied to the same species at another state of development. For example, Kumar Katya et al. show that BSF meal of a certain type is only applicable as feed supplement for juvenile Lates *calcarifer* (Kumar Katya et al., "Efficacy of insect larval meal to replace fish meal in juvenile barramundi Lates calcarifer, reared in freshwater", Int. Aquat. Res. (2017), 9:303-312); there is no hint at all that BSF meal may be applicable to any other species, except *Lates calcarifer*. Even more specific, it is not even considered to be applicable to adult individuals of *Lates calcarifer*. Thus, the findings of K. Katya et al. with respect to Barramundi/Asian sea brass are solely applicable to juvenile barramudi and are completely different from and not relevant to the invention revealed herein. For the same reason the publication of Xiaopeng Xiao et al. ("Effects of black soldier fly (Hermetia illucens) larvae meal protein as a fishmeal replacement on the growth and immune index of yellow catfish (Pelteobagrus fulvidraco)", Aquaculture Research 2018;49:1569 - 1577) is not relevant to the invention revealed herein, too.

However, the acceptance of BSF compounds by aquaculture species depends on the nutritional composition of the BSF, including fat and protein contents, which in turn are influenced by factors such as the developmental stage, rearing conditions, and feeding medium of the BSF. This has, heretofore, been considered as a disadvantage.

Another challenge is to ensure that the feed substrates for the BSF are highly sustainable. From an ecological and economic perspective, these should consist of readily available and cost-effective organic side streams (resp. by-products). From a social point of view, the use of these by-products as feed for BSF should not compete with other uses.

There are a number of by-products of low economic value that are available in large quantities worldwide (several hundred thousand tons per year), and which are usually disposed of, but can be digested by BSF directly or after moderate processing. These include cocoa bean shells, apple pomace (including depectinized apple pomace) and potato peelings. It should be noted that these by-products generally cannot be used directly as feed in aquaculture due to their suboptimal nutritional profile and the presence of harmful constituents, and even their use as feed substrate for the BSF is not recommended due to the presence of natural toxins and pesticides.

Cocoa bean shells are a by-product of cocoa production. Cocoa pods are produced in vast quantities, especially in Africa, but also in the Americas and Asia. The beans are extracted, fermented, and dried. The dried beans are shipped around the world for, among others, chocolate production. During the process, the beans are deshelled and the shells, which make up 10-17% of the bean's weight, are mostly discarded. As a result, more than 700,000 tons of cocoa bean shells are generated each year, with Europe accounting for more than 250,000 tons.

Depectinized apple pomace is a by-product that remains after processing apples to remove pectin, a natural thickening agent used in various foods. The pomace typically contains the peels, seeds, cores, stalks, and remaining soft tissues of the apples. Worldwide, pectin production from apple pomace is an important industry, although exact production figures may vary. It is estimated that apple pomace accounts for a significant portion of the global pectin supply, with millions of tons of apple pomace processed annually.

Finally, potato peelings are a plant by-product of potato production and processing. Potatoes are one of the world's most important crops. During processing, 15-40% of peel waste is generated. This results in at least 70,000-140,000 tons of potato peel by-products per year, most of which are disposed of in landfills.

Worldwide, a large number of companies, for example, have emerged that produce the economically most important shrimp species - the Pacific white Shrimp (PWS; *Penaeus vannamei*) - locally in closed aquaculture facilities. They are increasingly interested in improving the sustainability of their operations by using shrimp feed with a lower environmental footprint. Therefore, the use of BSF reared on regional plant by-products could be an important step in this direction as part of a circular economy.

There are only very few studies that have used BSF reared on plant by-products in shrimp feeding trials. For example, replacing 50% of the fishmeal-based feed with bran-fed BSF had no negative effect on the growth performance or survival rate of shrimp. Moreover, a mixture of bran and cereal meal as feed for BSF and the subsequent use of defatted BSF meal (30-70% replacement of fishmeal) led to improved growth of the shrimp compared to a fishmeal-based diet. Similarly, the use of food by-products as BSF feed and the replacement of up to 60% of the fishmeal with the corresponding defatted BSF meal had no adverse effects on shrimp. However, it remains unclear for most plant by-products to what extent they affect shrimp life-history parameters and thus shrimp aquaculture as a whole. This is particularly true for neglected plant by-products of low economic value and which are usually disposed of, such as cocoa bean shells, depectinized apple pomace, and potato peelings.

Within the current state of the art, BSFL meals have only been used as a supplement to commercial aquaculture feeds. This is because many BSFL meals vary in protein and fat content and therefore do not, or only incidentally, meet the nutritional requirements of most aquaculture species at all or specific life stages. Moreover, plant by-products such as apple pomace, cocoa been shells, and potato peelings have not been recommended as feed substrates for the BSF due to of the presence of natural toxins and pesticides.

Surprisingly, there are no systematic studies on the effects of the widely available plant by-products cocoa bean shells, (depectinized) apple pomace, and potato peelings on the nutritional profile of BSF required for use in crustacean and fish aquaculture. This may be due to contaminants and toxins in these plant by-products and the poor growth performance of BSFL reared on them, which increases the cost of BSF production. Moreover, the variable fat and protein content of BSF has always been considered a major obstacle to the production of aquaculture feeds with a defined nutritional profile, rather than an excellent opportunity to customize the feed. As a result, no one has yet considered to:

1) use these specific plant by-products (cocoa bean shells, (depectinized) apple pomace, and potato peelings) to produce BSFL with a defined and consistent fat and protein content for aquaculture, or

2) use a single BSFL meal type or a targeted combination of BSFL meal types to meet the exact species- and life stage-specific fat and protein requirements of aquaculture species, or

3) use a targeted combination of meal types for the technically simple and economically feasible production of sustainable pellet feeds for less common aquaculture species and life stages for which commercial feeds are not available, or

4) take advantage of the excellent FCR of BSFL reared on these by-products when used as feed for aquaculture, thus partially or fully compensating for the low growth performance of the respective BSFL, or

5) cover 50-100% of the protein and fat requirements in pelleted aquaculture feeds by meal(s) of BSFL reared on these plant by-products, or

6) replace 75-100% of the fishmeal amount in pelleted aquaculture feeds by meal(s) of BSFL reared on these plant by-products.

## Content of the invention

An objective of the present invention is to provide feeds for aquaculture, mainly based on insect meal(s), in particular based on meal(s) produced from the black soldier fly (BSF, *Hermetia illucens* s.l.) and/or from larvae of *Hermetia illucens* s.l., which exert species-specific suitable fat and protein content for use in aquaculture without the need to use other protein and fat sources in the feed.

Many characteristics of the BSF, such as its fast reproduction rate, low risk of disease transmission and versatility in feed utilization, high protein content (on average about 50%), short production cycle and the possibility of local rearing make it an attractive candidate for use in aquaculture feeds. However, the nutrient composition of BSFL, especially the fat and protein content, may vary widely depending on the feed substrate. This high variability has been a major problem for aquaculture because each fish and crustacean species, and each life stage of these species, generally requires a feed with a defined protein and fat content. These requirements can be found, for example, in the Food and Agriculture Organization (FAO) guidelines and reports on the nutrition of aquaculture species.

To control the fat and protein content of BSFL, plant by-products are used that are of low economic value, available in large quantities worldwide, and which are usually disposed of. These include cocoa bean shells, apple pomace (including depectinized apple pomace) and potato peelings. It should be noted that these by-products are not recommended as feed substrate for the BSF due to the presence of natural toxins and pesticides.

In order to achieve the above objective, the present invention provides a method for feeding insects, in particular BSF larvae (BSFL), which allows the direct preparation of feeds based on insect meals (either protein-concentrated or not) that meet the protein and fat requirements of individual aquaculture species and their individual life stages. The present invention also comprises a method for producing a feed for aquaculture, especially for aquaculture of Pacific white shrimp, *Penaeus vannamei.* This is achieved by the targeted individual or combined use of meal types, which are produced by using specific plant by-products as the feed substrate for the BSFL. Alternatively, the exact fat and protein content of the feed is achieved by a targeted combination of the feed substrates for the BSFL.

An advantage of the invention is that it provides an excellent way to reduce the environmental footprint of aquaculture feeds by replacing fishmeal, soy protein, palm oil, and other non-sustainable high fat or high protein ingredients in conventional aquaculture feeds with insect-based protein and fat sources such as fresh BSFL or BSFL meal. The environmental footprint is further reduced by using plant by-products that would normally be discarded as feed substrates for the BSF.

In view of the great potential of neglected plant by-products in combination with their use as feed for BSF in a circular economy, the present invention comprises the production of species-specific pelleted feeds for the aquaculture of selected fish and crustacean species, which contain BSFL meals (either protein-concentrated or not) and cover 50-100% w/w of the specific protein and fat content requirements of these aquaculture animals. The guarantee of an exact fat and protein content is achieved by the targeted individual or combined use of meal types, which are produced by using the three by-products cocoa bean shells, apple pomace (including depectinized apple pomace) and potato peelings as the feed substrate for the BSF, resp. BSFL. Alternatively, the exact fat and protein content of the feed is achieved by a targeted combination of the three feed substrates for the BSFL.

For reasons of economic sustainability and animal welfare, the present invention relates only to BSF-based species-specific feeds for high-value aquaculture species that also naturally (wild type species) feed on arthropods and/or other invertebrates. These include farmed shrimps (family Penaeidae), salmonids (Salmonidae), carps (Cyprinidae), flatfish (Scophthalmidae), seabreams (Sparidae), croakers (Sciaenidae), sturgeons (Acipenseridae), airbreathing catfish (Clariidae), and temperate basses (Moronidae).

For the production of BSFL, the plant by-products cocoa bean shells, apple pomace (including depectinized apple pomace) or potato peelings are used as a feed substrate alone or in various combinations. The BSFL produced then have a by-product specific nutrient profile in terms of fat and protein content. In BSFL fed with cocoa bean shells, for example, the fat content (dry matter) is approx. 29 % w/w and the protein content (dry matter) is approx. 47 % w/w. When apple pomace is used as a substrate, the fat content is approx. 5 % w/w and the protein content is approx. 52 % w/w. When potato peelings are used, the fat content is approx. 3 % w/w and the protein content is approx. 50 % w/w. Growth rates of BSFL can be further enhanced by adding chemically synthesized essential amino acids (e.g., methionine and/or lysine) to the feed substrate or by the addition of by-products that are rich in essential amino acids, such as oilseed meal or brewer's spent grain, without leaving the scope of the invention.

In order to tailor the nutrient profile of the BSFL meals to the specific fat and protein feed requirements of the different aquaculture species, the BSFL are reared separately on the three by-products mentioned above and processed into meal. Alternatively, a targeted combination of the three by-products is used as a mixed substrate for the BSFL. If new potato, cocoa and apple varieties or new (genetic) BSF lines (BSF is probably a species complex - *Hermetia illucens* s.l.) are used, the nutrient content of the meals is to be redetermined. According to the nutrient profile of the respective aquaculture species and life stage, a selected meal variety or a specific mixture of meal varieties is then used for the production of the pelleted aquaculture feed. For aquaculture species with high protein requirements, the BSFL meals can be protein concentrated prior to pelleting.

The use of BSFL meals in the pellets reduces the amount of unsustainable fishmeal by 75-100% (corresponding to approximately 7.5-40% w/w of the total pellet weight, depending on the aquaculture species; see also Table 7). Up to 5% w/w of the pellets can consist of fishmeal as long as it comes from sustainable sources (e.g., fish by-products from aquaculture or by-catch). Moreover, the use of BSFL meals in the pellets covers 50-100% of the species- and life stage-specific protein and fat content (corresponding to approximately 20-75% w/w of the total pellet weight (dry matter), depending on the aquaculture species; see also Table 9). Up to 50% of this protein and fat requirement of the respective aquaculture species may be met by plant products, preferably with a low ecological footprint. Fish oil can also be used as long as it comes from sustainable sources (e.g., fish by-products from aquaculture or by-catch). To reduce the use of fish oil, essential fatty acids (e.g., omega-3 and omega-6 fatty acids) or sources of essential fatty acids (e.g., microalgae, macroalgae, seaweed, seagrass or algae cake) may be used as substitutes/feed additives without leaving the scope of the invention.

To bind the pellets together and maintain their shape in the water, binder ingredients are added (e.g., starches, gums, binder proteins, alginates, cellulose derivatives, bentonite, lignosulfonates). Depending on the aquaculture species and life stage, the pellets are enriched with carbohydrate sources (e.g., cereal grains), specific amino acids (e.g., methionine and lysine), lecithin as source of phospholipids, vitamins, minerals (e.g., dicalcium phosphate), gluten to improve digestibility, natural pigments (e.g., astaxanthin, carotenoids), attractants (e.g., nucleotides, betaine, protein hydrolysates, yeast extracts), immunity-enhancing and health-promoting additives (e.g., antioxidants, prebiotics, probiotics, nucleotides, beta-glucans, enzymes, botanical extracts) (see also Table 7), without leaving the scope of the invention.

Our controlled feeding trials for the PWS have exemplarily shown that a proportion of 50 % w/w (dry matter) BSFL reared on depectinized apple pomace resulted in variable, but overall very good growth rates in this important aquaculture species.

Furthermore, we showed that our experimental pelleted diets for PWS, in which we replaced 50-100% w/w non-sustainable fishmeal and 12-56% w/w palm oil with meal from BSFL reared on cocoa bean shells, depectinized apple pomace, or potato peelings, did not result in significant differences in shrimp growth rates compared to a control group.

Based on our successful exemplary trials with the very demanding PWS, our process is also ideally suited for the production of specific pelleted feeds for other arthropod- and/or invertebrate-feeding aquaculture species with individual protein and fat requirements.

Moreover, due to the excellent feed conversion ratios (FCR) of insect-based feeds, the amount of feed used to grow crustaceans and fishes in aquaculture cab be reduced, resulting in economic benefits and a positive effect on water quality in terms of nutrient loading.

Considering the great potential of neglected plant by-products in a circular economy, the general goal of a study that led to the invention revealed herein was to evaluate the usability of BSFL reared on these by-products as sustainable feed for aquaculture, especially PWS aquaculture. Based on randomized controlled feeding trials, we specifically:

1) determined the nutritional profiles of three candidate plant by-products - cocoa bean shells, depectinized apple pomace, and potato peelings - and compared them with a grain-based control feed,
2) evaluated the nutritional profiles of BSFL reared on these plant by-products compared to a control feed,
3) determined the growth performance characteristics of the PWS fed with BSFL reared on these plant by-products compared to a control feed, and
4) calculated the respective feed conversion parameters.

We found that i) the nutritional profiles of the three tested feeds and a grain-based control feed differed in several parameters, ii) the nutritional profiles of BSFL reared on these feeds also differed considerably, particularly in protein and fat contents, iii) growth performance parameters of PWS fed BSFL reared on these plant by products or the control feed did not show significant differences between groups, and iv) feed conversion parameters of PWS fed BSFL reared on the plant by-products were excellent compared to the control group.

*Nutritional profiles of plant by-products differ from grain-based control feed*

Most nutritional profiles of the plant by-products used to rear BSFL (i.e., cocoa bean shells, depectinized apple pomace, and potato peelings) differed from our grain-based control feed in several parameters (Table 4), particularly in moisture, crude fat, and crude protein contents. While moisture content may not be a critical factor in rearing BSF as feed for PWS, previous studies have shown that fat and, to a lesser extent, protein content may be critical. In fact, the rate at which fishmeal-based compounds in PWS feeds can be replaced by BSF-based compounds is highly dependent on the fat content of the BSFL.

However, it should be noted that the plant by-products used may differ from similar products depending on the place of origin and the plant species or variety used. For example, the protein content of cocoa bean shells can vary worldwide between 10.3 and 27.4% dry weight and the fat content between 1.5 and 8.5% dry weight. Similarly, the fat content of potato peelings may vary between 0.1 and 0.6% of fresh weight (roughly equivalent to 0.6-2.6% dry weight) and the protein content between 1.2 and 4.4% of fresh weight (roughly equivalent to 7.2-16.1% dry weight). These large ranges are not surprising considering, for example, that more than 4,000 potato varieties are cultivated and that processing methods for the production of potato peelings may vary.

*Nutritional profiles of BSFL reared on plant by-products differ from control group*

As the nutritional profiles of the plant by-products (i.e., cocoa bean shells, depectinized apple pomace, and potato peelings) and the control feed differed in several parameters (see Table 4), we set up the theory that this might lead to differences in the nutritional profiles of the BSFL reared on these feeds. While we observed significant differences between BSFL fed plant by-products vs. the control feed for all parameters tested, the crude fat and crude protein contents are particularly noteworthy (Table 5). Crude fat content was lower and crude protein content was higher in all BSF groups reared on plant by-products. For example, BSFL fed potato peelings and depectinized apple pomace had a 91% and 84% lower fat content, respectively, than the control group. Similarly, the protein content was 23% and 28% higher in the former and latter treatment groups, respectively, than in the control group.

Considering the nutritional profile of the BSFL from this study (Table 5), both potato peelings and apple pomace appear to be the most promising diets for rearing BSF as a sustainable feed for PWS. These low-fat diets not only reduce the body fat content of BSF, but also subsequent health effects in PWS, such as hepatopancreatic damage. Another advantage of the low fat content of BSFL reared on depectinized apple pomace and potato peelings is that further processing steps to reduce the fat content of the BSF-based feed, such as defatting, might not be necessary. This may save energy, preserve the nutrients contained in the BSFL and increase their attractiveness for direct feeding in aquaculture. Starting from these findings, the method of feeding BSFL revealed herein was developed where the BSFL are reared on a defined plant by-product or a mixture of defined plant by-products to produce BSFL with a defined and consistent fat and protein content.

Based on the nutritional parameters examined in the current study, both depectinized apple pomace and potato peelings appear to be very suitable plant by-products alone or in combination with each other or with other plant by-products for rearing BSF as feed for PWS. Even the cocoa bean shells tested showed a slightly more favorable nutritional profile compared to the control feed, so that their addition to the food for the BSFL can be used to fine-tune the BSFL feed mix to be fed to BSFL to achieve a desired/defined fat and protein content of the BSFL.

The fact that the nutritional profiles of BSFL reared on plant by-products are very promising in terms of protein and fat contents allows to expect similar effects with other insects.

*Low growth performance of BSFL fed with plant by-products*

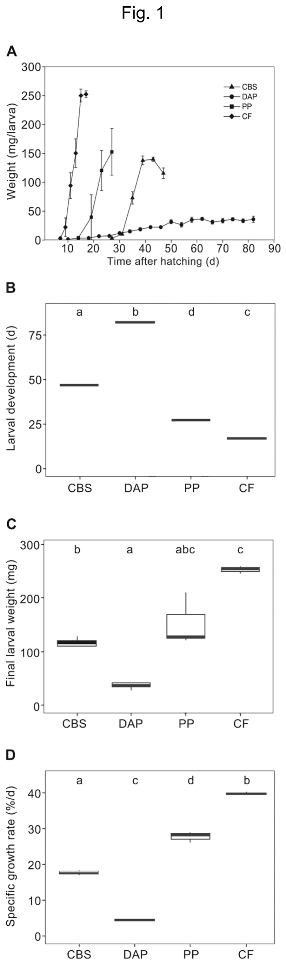

All nutritional profiles of BSFL reared on our plant by-products (see Table 5) were promising in terms of fat and protein content. In fact, that of BSFL reared on cocoa bean shells was relatively close to that of BSFL reared on the grain-based control feed. However, despite these promising nutritional profiles, all growth performance parameters (i.e., larval development time, specific growth rate, and final larval weight) of the BSF reared on plant by-products were significantly inferior to those reared on the control feed (see Fig. 1). This is particularly evident in the BSF fed depectinized apple pomace and cocoa bean shells and, to a lesser extent, in the BSFL reared on potato peelings. However, this lower growth rate is outweighed by the benefit of a better FCR of the PWS when used as aquaculture feed (cf. below). Moreover, the lower growth rate could be improved by adding essential amino acids that are not present or are present in low concentrations in the plant by-products.

These results are broadly consistent with the limited data available in the literature. In a recent study, 12 plant by-products, including apple pomace, were fed to BSFL and their growth performance was recorded. BSFL reared on apple pomace showed poor growth rates resulting in a low final weight (ca. 40 mg). This is in line with our results (final larval weight 27-41 mg).

To the best of our knowledge, there are no experimental data on growth parameters of BSF fed exclusively with cocoa bean shells. However, in a feeding study with cocoa pods, BSFL also showed decreasing weight gains and final weights with increasing proportion of cocoa pods in the BSFL feed.

With regard to potato peelings, we are not aware of any experimental study in which peels of potato (*Solanum tuberosum*) were used as a complete feed for BSFL. However, a study using peels of the sweet potato (*Ipomoea batatas*) showed a significantly reduced weight gain and lower final biomass of BSF compared to BSF fed soy bran. It should be noted, however, that the potato and the sweet potato are not related.

The reasons for the reduced growth performance of BSFL fed the above mentioned plant by-products are not well understood and may be by-product specific. A review of the health effects of apple pomace concluded that this by-product is generally safe for human consumption. However, the authors raised concerns about the presence of natural toxins and pesticides when used as animal feed. Of particular relevance is the potent insecticide acetamiprid. In addition, the high content of tannins and anti-nutritional phenolic compounds in apple pomace could also have health implications for BSF.

As for cocoa beans, a review raised concerns about heavy metal intake and insecticide contamination. The latter may accumulate particularly in the outer part of the cocoa bean - the cocoa bean shell. The authors also stressed the high concentration of polycyclic aromatic hydrocarbons, which may accumulate during the industrial drying of cocoa beans. They are known toxic chemicals that have been shown to slightly increase the development time of BSFL.

Finally, potatoes, like many other vegetables, often contain high levels of insecticides, which accumulate particularly in the peel. In addition, potato peelings may have high levels of steroidal alkaloids such as $\alpha$-solanine and $\alpha$-chaconine, which are natural toxins with insecticidal properties.

Besides these properties of specific plant by-products potentially affecting the growth characteristics of BSFL, there may also be general nutritional limitations. For example, studies have shown that fruit and vegetable by-products are low in essential amino acids. This may contribute to a prolonged developmental time of BSFL reared on plant by-products. Therefore, supplementation with specific essential amino acids that are lacking in plant by-products may be a key to optimizing plant by-products as feed for BSFL and increasing growth performance of BSF. Thus, the scope of the invention also comprises supplementation of the feed for rearing the BSFL. Of course, supplementation of the grown BSFL themselves or of BSFL meal produced from the harvested BSFL is also possible without leaving the scope of the invention.

*No difference in growth performance of PWS fed with BSFL reared on plant by-products*

Our analyses of the nutritional profiles of the BSFL reared on plant by-products showed significant differences between these feeds and the grain-based control feed (Table 4). In addition, our analyses of the growth performance of BSFL reared on these by-products showed significantly delayed developmental processes and reduced final weights (see Fig. 1). Therefore, we also expected lower growth performance in our PWS reared on by-product-based combined feeds (i.e., 50% conventional compound feed and 50% BSFL reared on the by-product depectinized apple pomace) compared to our control feed (i.e., 50% conventional compound feed and 50% BSFL reared on a grain-based feed).

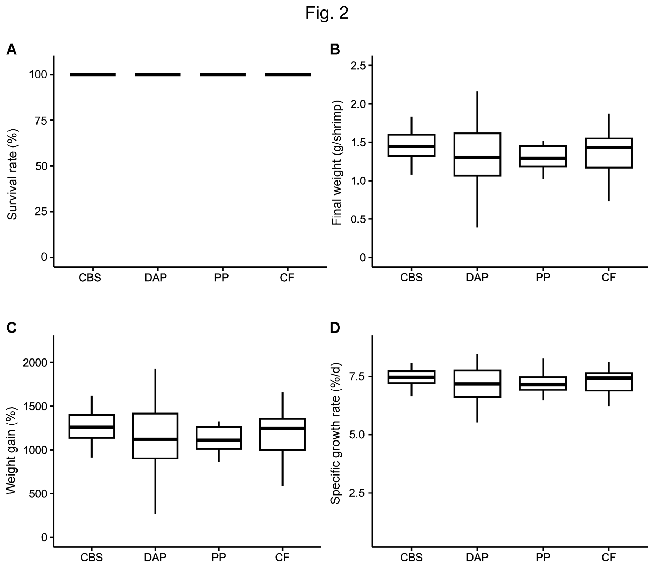

However, surprisingly, our randomized controlled trial showed no significant differences in growth parameters between the PWS treatment groups or between the treatment and control groups (Fig. 2). Survival rates of PWS were greater than 96% for all feeds tested (Fig. 2A). In addition, final weights, weight gains, and specific growth rates (Fig. 2B-D) were very similar. This shows that nutritional deficiencies or contaminants and toxins of the plant by-products may affect the BSF (see section *Low growth performance of BSFL fed with plant by-products*) but not the PWS fed these BSFL. We can only speculate as to the reasons for these findings. Without being bound to a certain theory, it may be that BSFL do not bioaccumulate some of these contaminants and toxins, but rather degrade them as recently proposed for polycyclic aromatic hydrocarbons and for the toxic polyphenolic compound gossypol. Subject to verification by future experiments, this may be an additional advantage of the invention revealed herein, for then it may also serve as a versatile and effective means of eliminating environmental contaminants from plant waste materials. Furthermore, BSFL may partially compensate for the deficiency of some essential amino acids in plant by-products. Accordingly, the inventors found that BSFL fed different vegetable by-products all had essential amino acid compositions close to the FAO nutritional requirements, at least for humans.

These results have important economic implications for commercial shrimp aquaculture, as BSFL reared on our plant-by products do not require defatting or supplementation of essential amino acids to be used as PWS feeds. Moreover, from an environmental perspective, the good growth performance of PWS makes it possible to replace 75-100% of the fishmeal-based components in PWS feeds with BSF-based compounds (see also Table 7).

*Good feed conversion parameters in PWS fed with BSFL reared on plant by-products*

The results of our feed conversion analyses are given in Table 6 and are rather unexpected. Our experimental feeds based on BSFL reared on plant by-products showed excellent feed conversion ratios (FCR) in PWS, ranging from 0.8 (BSFL fed depectinized apple pomace) to 1.0 (BSFL fed cocoa bean shells). These values were also better than the PWS control group, which had a FCR of 1.4.

In well-managed PWS farms, FCR range from 1.3 to 1.5 and in average PWS farms from 1.6 to 1.8. In poorly managed farms, the FCR can be as high as 2.5. Furthermore, in experimental studies where defatted BSF meal was used to rear PWS, FCR ranged from 1.1 to 1.4. FCR also depend on the age of the PWS, with young individuals or larvae often having better values, which can be as low as 1.1.

The FCR determined in our study have important implications, as they show that the low specific growth rates of BSFL fed plant by-products (see Fig. 1) are fully (potato peelings) or at least partially (cocoa bean shells and depectinized apple pomace) compensated for by the better FCR of the PWS reared on these BSFL. The excellent FCR in our treatment groups also helps to reduce the amount of feed required for BSF-based aquaculture, with positive side effects on water quality and nutrient pollution in aquaculture facilities.

The reasons for these exceptional FCR are not yet known to us. However, our empirical observations suggest - without being bound to a certain theory - that the BSFL reared on plant by-products provide better feeding stimuli to the PWS than those reared on the control feed. This may be due to the often higher protein and lower fat contents of the BSF reared on plant by-products. In addition, the excellent FCR could also be related to differences in the composition of macro- and micronutrients, which vary depending on the feed and rearing conditions.

Our surprising finding of outstanding FCR is of economic importance for commercial shrimp farming, as it shows that some as yet unspecified characteristics of BSF reared on plant by-products are significantly improving feed conversion parameters.

The excellent FCR found in PWS fed with BSF reared on plant by-products allows to expect similar effects in other aquatic livestock being raised in aquaculture.

In our study, we used BSF-based feeds to investigate nutritional and growth-performance parameters in PWS. Both the treatment and control feeds consisted of 50% fresh BSFL. Therefore, our results of similar growth performance and excellent FCR of PWS fed with BSFL reared on plant by-products are primarily applicable to shrimp aquaculture systems where BSFL are fed directly to the PWS.

In large-scale aquaculture facilities, PWS are typically reared on dry feed pellets, which would require processing of BSFL. On the one hand, these processing steps may alter the macro- and micronutritional profiles of the BSFL and lead to a reduction in feeding stimuli. On the other hand, previous studies have suggested that processing of BSFL (e.g., drying, cuticle removal) may also increase nutrient availability and/or acceptability of the BSFL. Therefore, we conducted preliminary experiments with pelleted feeds for PWS based on a meal of BSFL reared on the by-product depectinized apple pomace (see Section *Further experiments with pelleted feeds for PWS based on BSFL meal).*

**Detailed embodiments of the invention**

## Materials and methods

*Species studied and pre-treatment*

BSF were obtained from Bio.S Biogas (Grimma, Germany) in July 2018 (Table 1). Since then, the population has been kept genetically isolated from other populations (> 37 generations). Adult BSF were maintained in $60 \times 60 \times 90$ cm (length $\times$ width $\times$ height) mesh cages (Bioform, Nürnberg, Germany), located in a greenhouse (Fraunhofer IME, Giessen) at $26 \pm 1$ °C, $60 \pm 5\%$ relative humidity, and a 12 h photoperiod (L-PL-ECO623330, Lence Technology, Langen, Germany). Water-soaked paper towels provided drinking water *ad libitum* and the mesh cages were sprayed with water daily. Fresh egg clutches were collected from artificial oviposition sites consisting of three wooden boards spaced by washers and held in place with rubber bands. After weighing (ALJ 160-4A, Kern & Sohn, Balingen, Germany), 150 mg of eggs (approximately 6000 eggs) were transferred into $19.5 \times 16.5 \times 9.5$ cm plastic boxes and moistened. Once $\geq 50\%$ of the eggs had hatched, the neonates were initially fed 10 g of the corresponding feed. The boxes were monitored daily for remaining water and feed, and additional feed was provided *ad libitum* (typically at 48-hour intervals). The moisture content of the diets was measured using a TMT-MC-7828S soil moisture meter (OCS.tec, Neuching, Germany) and adjusted to approximately 70% by spraying. BSFL were reared in a climate chamber at $27 \pm 1$ °C and $65 \pm 5\%$ relative humidity in darkness.

Juvenile Pacific white shrimp (PWS, Table 1) were obtained from Suburban Seafood Germany UG (Nebelschütz, Germany). They were acclimated for one week in a wooden tank (Douglas fir, 1200 mm height, 600 mm radius, Wilhelm Eder GmbH, Bad Dürkheim Germany), located at the marine aquaculture experimental facility of the Justus Liebig University Giessen, at a stocking density of 0.8 larvae $L^{-1}$. The indoor recirculation system was equipped with a filtration system consisting of a drum filter (35 $\mu$m drum mesh, FAIVRE, Baume-les-Dames, France) and a protein skimmer (Bubble King DeLuxe 650 intern, Royal Exclusiv, Wesseling Germany). The shrimp were fed six times per day ad libitum with the PWS compound feed Grower 1 (diameter 1.7 mm, Le Gouessant Aquaculture, Lamballe, France) through automatic feeders (easyFuttermat, Aqualight GmbH, Bramsche Germany).

DNA barcoding of the mitochondrial cytochrome c oxidase subunit I (COI) gene in two individuals each of BSF and PWS was performed according to standard barcoding protocols.

Table 1: Characteristics of the black soldier flies (BSF) and Pacific white shrimp (PWS) studied.

| Characteristic | BSF | PWS |
|---|---|---|
| Species name | Black soldier fly, *Hermetia illucens* s.l. | Pacific white shrimp, *Penaeus vannamei* |
| Origin | Bio.S Biogas (Grimma, Germany) | Suburban Seafood Germany UG (Nebelschütz, Germany) |
| Genetic strain | For DNA barcoding information on the strain used see GenBank accession # PQ187607 and PQ187608 | For DNA barcoding information on the strain used see GenBank accession PQ465998 and PQ465999 |
| Life stage | 5th larval instar | Juvenile specimens (7 weeks old) |
| Weight | 36-253 mg | $0.10 \pm 0.01$ g |
| Length | 0.5-2.5 cm | $2.4 \pm 0.6$ cm |

*Nutritional analyses of BSF feeds and BSFL*

For the nutritional analyses, BSFL and the BSF feeds were lyophilized for 72 h and then ground in a mortar. Prior to lyophilization, the moisture content was determined thermogravimetrically using a M35 moisture analyser (Sartorius, Göttingen, Germany). For crude ash determination, the diets were pre-ashed in a quartz crucible over a Bunsen burner, incinerated twice at 550 °C for 6 h in a muffle furnace (L 9/11, Nabertherm, Lilienthal, Germany), and the content calculated by differential weighing. The total nitrogen content was determined by the Kjeldahl method. Samples were subjected to sulfuric acid digestion (Kjeldatherm, C. Gerhardt GmbH & Co. KG, Königswinter, Germany), followed by automated steam distillation and titration using the Vapodest 500 (Vapodest 500, Gerhardt, Königswinter, Germany) and TitroLine 5000 (SI Analytics, Mainz, Germany) systems. A conversion factor of 6.25 was used to calculate the crude protein content, as is usual within the state of the art. For the determination of crude fat content according to Weibull-Stoldt, samples were first manually disintegrated in 150 mL of boiling 4 mol·$L^{-1}$ HCl for 30 min. They were then filtered, washed neutrally with hot demineralized water, and dried at 105 °C for 2 h. Crude fat extraction was performed automatically with n-hexane in a Soxtherm system (Gerhardt, Königswinter, Germany). The content was determined gravimetrically.

*Plant by-products and control diet used as BSF feeds.*

Four diet groups were established for the feeding trials: cocoa bean shells, depectinized apple pomace, potato peelings, and a grain-based control feed. Cocoa bean shells were provided by August Storck KG (Berlin, Germany). The depectinized apple pomace was obtained from agro Food Solution GmbH (Herbavital F12, Werder, Germany). Both cocoa bean shells and depectinized apple pomace were homogenized in a Thermomix TM6-1 for 1 min at setting 10 (Vorwerk, Wuppertal, Germany). The control feed was ground in a Mockmill 200 grain mill (Wolfgang Mock, Otzberg, Germany) and served as reference feed (GoldDott Eierglück, Derby Spezialfutter, Muenster, Germany). After processing, control feed, cocoa bean shells, and depectinized apple pomace had a particle size of 0.1-1.5 mm, which was determined with analytical sieves (Retsch, Haan, Germany). Due to their low moisture content (6.5-9.5%), the feed was stored at room temperature in separate airtight plastic barrels until further use.

Potato peelings were produced by peeling potatoes (variety "Kuras") on a Flott 16K potato-peeling machine (Flottwerk, Rotenburg a.d. Fulda, Germany) and were supplied frozen by the Fraunhofer Institute for Process Engineering and Packaging in Freising (Germany). Due to the high moisture content (82%), the potato peelings were stored at -20 °C and processed directly on the day of feeding. The potato peelings were mixed into a slurry using the Thermomix TM6-1 for 10 min at setting 6-8. Excess water was drained before feeding. In addition, part of the potato peelings was dried for 12 h at 50 °C (BDA-15 dehydrator, Beeketal Lebensmitteltechnik, Rastdorf, Germany) and ground to adjust the feed moisture during feeding.

*BSF feeding trials*

For each BSF diet group, developmental and growth parameters were recorded using three replicate boxes (Table 2). The boxes were maintained under the conditions described above. Growth parameter documentation was started when the BSFL reached a manageable size of 3-4 mm, which was highly dependent on the feed. To obtain growth curves, the mean weight of 25 randomly selected BSFL was determined using an AT261 DeltaRange analytical balance (Mettler, Giessen, Germany). Measurements were stopped and boxes were harvested when $\geq 50\%$ of the population had reached the prepupal stage, indicated by brown coloration. The BSFL were separated from the substrate by sieving (AS 200, Retsch, Haan, Germany), cleaned of impurities- and stored at -20 °C for subsequent analysis and feeding to shrimp.

*PWS feeding trials*

For the PWS feeding trials (Table 2), a combined diet was used. It consisted, on a dry matter weight basis, of approximately 50% of the conventional compound feed Grower 1 and approximately 50% BSFL. This ratio has been suggested to have no adverse effects on growth performance and survival rate of PWS. The BSFL were reared on cocoa bean shells, depectinized apple pomace, potato peelings, or a control feed. For the latter, we used a grain-based diet as this is a common feed for BSFL. The relative amount of feed supplied daily was approximately 1.5% compound feed and approximately 1.5% BSFL of the PWS biomass on a dry matter basis. An automatic feeder was used to deliver the compound feed to the PWS. The BSFL were fed manually after thawing and cutting into pieces of 2-3 mm. For the calculation of feed conversion ratios (FCR), it was assumed that all the feed was consumed by the shrimp.

Table 2: Experimental conditions of the black soldier fly (BSF) and the Pacific white shrimp (PWS). CBS = cocoa bean shells, DAP = depectinized apple pomace, PP = potato peelings, CF = control feed.

| Characteristic | BSF | PWS |
|---|---|---|
| Duration of trials | 17-82 days ($\geq 50\%$ prepupae) | 35 days |
| Rearing system | Small-scale indoor rearing | Indoor clear water recirculation system |
| Rearing container | 19.5 × 16.5 × 9.5 cm polypropylene boxes, maximum filling capacity of 2 L, 12 boxes in total | 35 cm × 21 cm × 20 cm plastic tanks, filling capacity of 9.2 L, each divided in two chambers by a plastic wall, 56 tanks in total |
| Replications | n = 3 | n = 28 |
| Water filtration system | N/A | Vlies Dreambox 3.0 with fleece filter and protein skimmer (Royal Exclusiv), and a flow-through biofilter with bioballs |
| Photoperiod | 24 h dark | Blue LED light (ca. 12 h light/12 h dark) |
| Stocking density | 150 mg eggs per box ( approximately 6000 eggs) | 1 postlarva per chamber |

(continued)

| Characteristic | BSF | PWS |
|---|---|---|
| Feed | Fed *ad libitum* (typically at 48-hour intervals) with CBS, DAP, PP and CF | Four times daily at 6.00 am (compound feed), 9:30 am (BSFL), 4.00 pm (BSFL) and 10.00 pm (compound feed) to a visual satiation each time |
| Method of processing | Cleaned and stored in a freezer (-20 °C) until use | PWS were weighed, measured, and photographed at the start and end of the trials. After 35 days, the shrimp were euthanized, placed in bags, and stored in a freezer (-20 °C) |

The PWS were pre-selected for the trials based on weight and length criteria (see Table 1), and randomly distributed to the treatment and control tanks. Shrimp were kept individually to prevent competition and cannibalism. Each plastic tank had a clear front screen, blue opaque side walls and a Plexiglas lid to prevent shrimp escape and to reduce evaporation. Residual feed, shells and faeces were siphoned off once a week.

Tank water parameters (Table 3), including nitrogen, nitrate (test strips QUANTOFIX Peroxid 25, Macherey-Nagel, Düren, Germany), salinity and temperature (Hanna Instruments Deutschland, Vöhringen, Germany), were monitored daily. Dissolved oxygen and pH were measured twice a week with a multi-parameter probe (Multi 3620 IDS SET G, Xylem Analytics Germany, Weilheim, Germany). All information provided for PWS (Tables 1-3) complies with the guidelines for reporting experimental studies in shrimp.

Table 3: Water parameters for the PWS pre-experimental and experimental periods.

Data represent mean $\pm$ SD. *Only found in the first week, afterward 0.0 mg L$^{-1}$.

| Water parameter | Value |
|---|---|
| Salinity (ppt) | 24.3 $\pm$ 0.5 |
| Temperature (°C) | 27.7 $\pm$ 0.2 |
| pH | 7.8 $\pm$ 0.1 |
| Dissolved oxygen (%) | 97.5 $\pm$ 2.1 |
| Nitrite (mg L$^{-1}$) | 0.1 $\pm$ 0.2* |
| Nitrate (mg L$^{-1}$) | 24.3 $\pm$ 9.5 |

*Data processing and statistical analyses*

Our randomized controlled trials followed the Consolidated Standards of Reporting Trials (CONSORT) guidelines. Statistical analyses of data were performed in Excel 2016 (Microsoft, Redmond, USA) and OriginPro 2022b (OriginLab, Northampton, USA). With a coefficient of determination of $R^2 = 0.26$, a statistical power of 0.85, and a significance level of $\alpha = 0.05$, a sample size of n = 28 would be required for a significant overall model with 1 predictor. These requirements were met for both the BSF and PWS feeding trials. Shrimp survival was analyzed using the non-parametric Kaplan-Meier estimator. The $S(t)$ survival functions were then compared pairwise using log-rank tests ($\alpha = 0.05$). The homogeneity of variance was assessed by Levene's test. For all other parameters, a one-way analysis of variance (ANOVA) was performed and mean values were separated using Tukey's test (homogeneous variance). When the assumption of homogeneity of variance was not met, we used Welch's one-way ANOVA followed by a Games-Howell *post hoc* test. Linear relationships were calculated using Pearson product-moment correlation. Visualization of the data was conducted in the R statistical environment, version 4.3.1, together with the graphical user interface 'RStudio' (version 2023.06.1+524, Posit PBC, Boston, USA).

The following formulas were used to obtain the efficiency of conversion of ingested feed (ECI; Eq. (1)), the feed conversion ratio (FCR; Eq. (2)), the specific growth rate (Eq. (3)), the survival rate (Eq. (4)), and the weight gain (Eq. (5)) (DM = dry matter, FM = fresh matter):

$$(1) \; Efficiency \; of \; conversion \; of \; ingested \; feed$$
$$= \frac{total \; biomass \; harvested \; (g, FM) - initial \; biomass \; (g, FM)}{total \; feed \; provided \; (g, DM)}$$

(2) *Feed conversion ratio*

$$= \frac{total\ feed\ intake\ (g, DM)}{final\ body\ weight\ (g, FM) - initial\ body\ weight\ (g, FM)}$$

(3) *Specific growth rate* (% *per day*)

$$= \frac{100 \times (Ln\ final\ body\ weight - Ln\ initial\ body\ weight)}{t\ (days)}$$

$$(4)\ Survival\ rate\ (\%) = \frac{100 \times (final\ number\ of\ shrimp)}{(initial\ number\ of\ shrimp)}$$

$$(5)\ Weight\ gain\ (\%) = \frac{100 \times (final\ body\ weight - initial\ body\ weight)}{initial\ body\ weight}$$

**Experimental results**

*Nutritional profiles of plant by-products and control feed*

Information on the nutritional profiles of the three plant by-products tested (i.e., cocoa bean shells, depectinized apple pomace, and potato peelings) compared to a grain-based control feed is provided in Table 4. The three plant by-products differed from the control feed in some or all of the nutritional parameters analyzed. In particular, potato peelings contained up to 13 times more water than the control feed and the other diets (*Welch's* $F_{(3, 3.35)} = 250.77$; $p < 0.001$). The crude ash content of the control feed was significantly higher than that of any of the plant by-products tested *(Welch's* $F_{(3, 4.07)} = 1121.34$; $p < 0.05$). Cocoa bean shells had the highest crude fat content, exceeding the control feed and the other diets by at least 940 % *(Welch's* $F_{(3, 419)} = 1792.14$; $p < 0.001$). The crude protein content of apple pomace and potato peelings was significantly lower than in the control feed and in cocoa bean shells, as was the total nitrogen content (*Welch's* $F_{(3, 3.88)} = 9550.25$; $p < 0.001$).

Table 4: Nutritional profiles of our three plant by-products (cocoa bean shells, depectinized apple pomace, potato peelings) and a grain-based control feed. Different letters within Table 4 (a-d) indicate statistically significant differences (p < 0.05). Data represent mean $\pm$ SD. DM = dry matter, FM = fresh matter.

| Parameter | BSF feed substrate | | | |
| --- | --- | --- | --- | --- |
| | Cocoa bean shells | Depectinized apple pomace | Potato peelings | Control feed |
| Moisture (% FM) | 6.5 $\pm$ 1.0[b] | 9.5 $\pm$ 0.5[b] | 81.9 $\pm$ 3.2[a] | 6.7 $\pm$ 0.3[c] |
| Crude ash (% DM) | 6.4 $\pm$ 0.0[c] | 3.6 $\pm$ 0.1[d] | 2.8 $\pm$ 0.1[b] | 12.9 $\pm$ 0.9[a] |
| Crude fat (% DM) | 30.1 $\pm$ 0.7[c] | 3.2 $\pm$ 0.0[b] | 0.4 $\pm$ 0.0[b] | 2.5 $\pm$ 0.0[a] |
| Crude protein (% DM) | 20.3 $\pm$ 0.0[b] | 8.0 $\pm$ 0.1[b] | 7.5 $\pm$ 0.8[b] | 18.2 $\pm$ 0.4[a] |
| Total nitrogen (% DM) | 3.3 $\pm$ 0.0[c] | 1.3 $\pm$ 0.0[b] | 1.2 $\pm$ 0.1[b] | 2.9 $\pm$ 0.1[a] |

*Nutritional profiles of BSFL fed with plant by-products or the control feed*

Information on the nutritional profiles of BSFL fed the three tested plant by-products (i.e., cocoa bean shells, depectinized apple pomace, and potato peelings) compared to a grain-based control feed is presented in Table 5. BSFL fed apple pomace and potato peelings had a significantly higher moisture content than those fed cocoa bean shells and the control diet (*Welch's* $F_{(3, 3.39)} = 4197.30$; $p < 0.05$). The crude ash content of BSFL fed potato peelings or apple pomace was also significantly higher than that of those fed cocoa bean shells or the control feed ($F_{(3, 11)} = 36.40$; $p < 0.001$). The fat content of the larvae varied greatly depending on the diet. Crude fat content was particularly low in BSFL fed apple pomace and potato peelings, compared to cocoa bean shells and the control feed ($F_{(3, 11)} = 755.02$; $p < 0.001$). Both total nitrogen and crude protein content of BSFL fed the three plant by-products were higher than of the larvae fed the control feed ($F_{(3, 11)} = 93.52$; $p < 0.001$).

Table 5: Nutritional profiles of black soldier fly (BSF) larvae reared on three plant by-products (cocoa bean shells, depectinized apple pomace, potato peelings) and a grain-based control feed. Different letters within Table 5 indicate statistically significant differences (p < 0.05). Data represent mean $\pm$ SD. DM = dry matter, FM = fresh matter.

| Parameters | BSFL reared on | | | |
|---|---|---|---|---|
| | Cocoa bean shells | Depectinized apple pomace | Potato peelings | Control feed |
| Moisture (% FM) | 70.1 $\pm$ 1.1[c] | 81.7 $\pm$ 0.5[d] | 79.2 $\pm$ 0.2[b] | 64.3 $\pm$ 0.0[a] |
| Crude ash (% DM) | 5.4 $\pm$ 0.2[a] | 9.0 $\pm$ 0.3[b] | 12.3 $\pm$ 0.7[b] | 4.9 $\pm$ 0.2[a] |
| Crude fat (% DM) | 28.9 $\pm$ 0.8[c] | 5.3 $\pm$ 0.4[b] | 3.1 $\pm$ 0.4[b] | 33.9 $\pm$ 1.1[a] |
| Crude protein (% DM) | 46.9 $\pm$ 0.2[c] | 52.1 $\pm$ 0.3[b] | 50.2 $\pm$ 0.9[b] | 40.7 $\pm$ 1.3[a] |
| Total nitrogen (% DM) | 7.5 $\pm$ 0.0[c] | 8.3 $\pm$ 0.0[b] | 8.0 $\pm$ 0.1[b] | 6.5 $\pm$ 0.2[a] |

*Growth performance of BSFL fed with plant by-products or the control feed*

Information on the growth characteristics of BSFL fed the three plant by-products (i.e., cocoa bean shells, depectinized apple pomace, and potato peelings) compared to a grain-based control feed is summarized in Fig. 1.

All BSFL fed plant by-products had a significantly longer development time compared to those fed the control feed ($F_{(3, 10)}$ = 9.58; p < 0.001). The development time was longest in larvae fed depectinized apple pomace followed by those fed cocoa bean shells and potato peelings. Neither crude protein (r = -0.47; p = 0.08) nor crude fat (r = 0.00; p = 0.93) content of the feeds were correlated with larval development time.

BSFL fed the control feed exhibited the highest and fastest weight gain, followed by those fed potato peelings, cocoa bean shells, and depectinized apple pomace (see Fig. 1A). Accordingly, final larval weight differed significantly between groups *(Welch's $F_{(3, 4.16)}$* = 504.61; p < 0.001), with the heaviest larvae reared on the control feed, followed by those reared on potato peelings, cocoa bean shells, and depectinized apple pomace (Fig. 1C). Final larval weight was positively correlated with crude protein content of the diets (r = 0.54; p < 0.05), but not with crude fat content (r = -0.09; p = 0.76). The specific growth rate of BSFL differed significantly among diets, with all plant by-products showing lower rates than the control feed *(Welch's $F_{(3, 2.67)}$* = 1587.68; p < 0.01) (Fig. 1D).

*Growth performance of PWS reared on BSF-based feeds*

Information on the growth characteristics of the PWS at the end of the 35-day controlled trial is summarized in Fig. 2. In the randomized trial, four diets were used for the PWS, which contained BSFL raised on plant by-products (i.e., cocoa bean shells, depectinized apple pomace, and potato peelings) or a grain-based control feed.

Shrimp survival rate was found to be consistently high, exceeding 96% on all diets ($\chi^2$ = 2.02; p = 0.57; Fig. 2A). Final weight ranged from 1.3 to 1.4 g per PWS individual, regardless of the diet (*Welch's $F_{(3, 57.77)}$* = 0.94; p = 0.43; Fig. 2B). Average weight gain was 1193% *(Welch's $F_{(3, 57.77)}$* = 0.94; p = 0.42) and the average specific growth rate was 7.2% $d^{-1}$ (*Welch's $F_{(3, 57.23)}$* = 1.43; p = 0.24), with no significant difference between the PWS groups fed the plant by-products and the control feed (Fig. 2C, D). Overall, the PWS individuals in the depectinized apple pomace group showed greater variations in final weight, weight gain, and specific growth rate than the other groups.

*Feed conversion parameters of BSF-based feeds in PWS*

Feed conversion parameters and information on the efficiency of conversion of the ingested feed by the PWS are presented in Table 6. Shrimp moisture content varied from 78% to 82% with significant differences among all groups ($F$(3, 11) = 17.02; p < 0.001). PWS fed the combined diet with BSFL reared on cocoa bean shell had the highest total harvested biomass (FM and DM basis). All PWS fed BSFL reared on plant by-products had significantly lower FCR (Welch's F(3, 55.31) = 20.25; p < 0.001) and significantly higher ECI (Welch's F(3, 56.48) = 33.76; p < 0.001) values compared to the control feed. ECI and FCR were positively (r = 0.63; p < 0.001) and negatively (r = -0.54; p < 0.001) correlated with increasing protein content of BSFL, respectively. The fat content of BSFL had a comparable effect on ECI (r = -0.59; p < 0.001) and FCR (r = 0.48; p < 0.001).

Table 6: Feed conversion parameters of Pacific white shrimp (PWS) fed a combined diet consisting of a compound feed as well as BSFL reared on plant by-products or a grain-based control feed. Data are mean $\pm$ SD. Different letters (a-d) within a row of Table 6 indicate statistically significant differences ($p < 0.05$; one-way ANOVA or Welch's ANOVA). FM = fresh matter, DM = dry matter.

| Parameters | PWS feeding group | | | |
| --- | --- | --- | --- | --- |
| | Cocoa bean shells | Depectinized apple pomace | Potato peelings | Control feed |
| Initial weight (g FM), n = 112 | | 0.1 $\pm$ 0.0 | | |
| Moisture of shrimp (% FM), n = 3 | 81.9 $\pm$ 0.9[c] | 80.7 $\pm$ 0.3[ac] | 78.4 $\pm$ 0.3[b] | 80.3 $\pm$ 0.3[a] |
| Total harvested biomass (g FM), n = 28 | 40.5 | 37.3 | 36.7 | 37.2 |
| Total harvested biomass (g DM), n = 28 | 7.3 | 7.2 | 7.9 | 7.3 |
| Feed conversion ratio, n = 28 | 1.0 $\pm$ 0.2[bd] | 0.9 $\pm$ 0.5[b] | 0.8 $\pm$ 0.1[bc] | 1.4 $\pm$ 0.3[a] |
| Efficiency of conversion of feed, n = 28 | 1.0 $\pm$ 0.2[c] | 1.4 $\pm$ 0.5[b] | 1.3 $\pm$ 0.3[b] | 0.8 $\pm$ 0.2[a] |

*Further experiments with pelleted feeds for PWS based on BSFL meals*

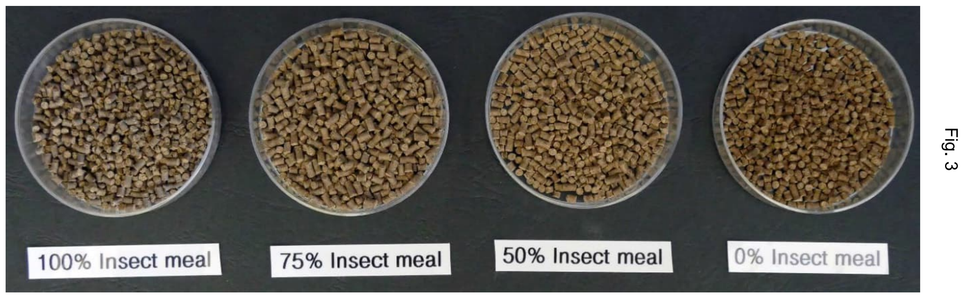

In further exemplary experiments, we produced pelleted feeds for the PWS (see Fig. 3), in which we replaced 25-100% w/w of non-sustainable fishmeal and 12-56% w/w of palm oil with meal from BSFL reared on the plant by-product depectimized apple pomace (Table 7). For these experimental feeds, we use a single meal type because the protein and fat content of BSFL reared on depectinized apple pomace (see Table 5) already closely matches the nutritional requirements of the PWS (see Table 9).

After 35 days of rearing on depectinized apple pomace, the BSFL were processed into meal using the following steps:

- the BSFL were harvested from the rearing substrate by handpicking;
- the BSFL were separated from any remaining substrate using forceps;
- the BSFL were killed by freezing at -20°C;
- the BSFL were crushed and homogenized in liquid nitrogen;
- the BSFL were freeze dried;
- the BSFL meal did not require defatting to remove access fat and/or to concentrate proteins because its fat content was low at 5.3 $\pm$ 0.4% w/w and the protein content was relatively high at 52.1 $\pm$ 0.3% w/w (Table 5).

To produce the standardized pelleted feeds, we exemplarily used the meal from the BSFL reared on the depectinized apple pomace, provided the binder ingredients and feed additives listed in Table 7, ground all the ingredients to a fine powder, pelleted the mixture at high pressure to obtain a continuous feed strand, cut the strands into uniform pieces, dried and cooled the pellets to ensure long shelf life, and tested the finished pellets for quality, size, density, and nutrient composition.

The *Hermetia* larvae, being reared according to the inventive method have a defined and consistent fat content (2-30% w/w, based upon dry matter) and protein content (40-55% w/w, based upon dry matter), depending on the *Hermetia* line and the plant by-product used as feed substrate.

Methods for producing pelletized feeds are well known within the state of the art and can be used without leaving the scope of the invention, for example the following sequence of process-steps, beginning with the providing of the major compounds to be processed into a feed.

a) Providing one or more base materials, e.g., BSFL meal;
b) providing binder ingredients and/or feed additives;
c) grinding all ingredients to a fine powder;
d) mixing the base material, e.g. *Hermetia* meal provided according to step a), with the ground binder ingredients and/or feed additives, provided according to steps b) and c), so that a homogeneous feed mixture is obtained;
e) optionally conditioning the feed mixture obtained in step d) by adding moisture and heat to prepare it for pelleting;
f) pelleting the feed mixture obtained in step d) or step e) by using an extruder or other pelleting devices, thereby applying pressure, moisture and if necessary heat, and shaping the feed into pellets of the desired size and density;
g) drying the pellets formed in step f) to reduce moisture content;
i) cooling the pellets obtained in step g) to prevent sticking and to ensure the stability of the aquaculture feed obtained;
j) optionally coating the pellets with a thin layer of fat or oil to improve palatability, protect against oxidation, and enhance nutrient delivery;

k) optionally testing the finished pellets obtained in step j) for quality, size, density, and nutrient composition.

Table 7: Composition (in % w/w) of our experimental pelleted BSFL meal feeds for PWS. Feed names refer to the fishmeal replacement rate (R) (25-100% w/w). Components that differ between feeds are indicated in bold. The composition of the PWS control feed is in accordance with the well known state of the art.

| Component | Control feed | Feed 25R | Feed 50R | Feed 75R | Feed 100R |
|---|---|---|---|---|---|
| **BSF meal** | **0** | **4.8** | **9.5** | **14.3** | **19.0** |
| **Fishmeal *(Clupea* sp.)** | **14.3** | **10.7** | **7.1** | **3.6** | 0 |
| Poultry blood meal | 8.6 | 8.6 | 8.6 | 8.7 | 8.7 |
| Fish oil | 1.8 | 1.8 | 1.8 | 1.8 | 1.8 |
| Pea protein isolate | 7.9 | 7.9 | 7.9 | 7.9 | 7.9 |
| Soy protein concentrate | 17.9 | 17.9 | 17.9 | 17.9 | 17.9 |
| Wheat gluten | 8.4 | 8.4 | 8.4 | 8.4 | 8.4 |
| **Palm oil** | **3.2** | **2.8** | **2.3** | **1.8** | **1.4** |
| L-Lysin | 0.2 | 0.2 | 0.2 | 0.2 | 0.2 |
| DL-Methionine | 0.2 | 0.2 | 0.2 | 0.2 | 0.2 |
| Wheat starch | 15.3 | 15.3 | 15.3 | 15.3 | 15.3 |
| Wheat flour | 19.0 | 18.2 | 17.4 | 16.7 | 16.0 |
| Pellet binder | 0.9 | 0.9 | 0.9 | 0.9 | 0.9 |
| Vitamin premix | 0.9 | 0.9 | 0.9 | 0.9 | 0.9 |
| Dicalcium phosphate | 1.4 | 1.4 | 1.4 | 1.4 | 1.4 |

The following experiments were conducted with these experimental BSFL-based feeds for PWS:

- determination of survival rate of PWS reared on these pelleted feeds (pelleted feeds according to the invention in comparison with reference pelleted feed/control feed),
- determination of weight gain of PWS reared on these pelleted feeds (pelleted feeds according to the invention in comparison with reference pelleted feed/control feed),
- determination of the welfare parameter antenna length of PWS reared on these pelleted feeds (pelleted feeds according to the invention in comparison with reference pelleted feed/control feed).

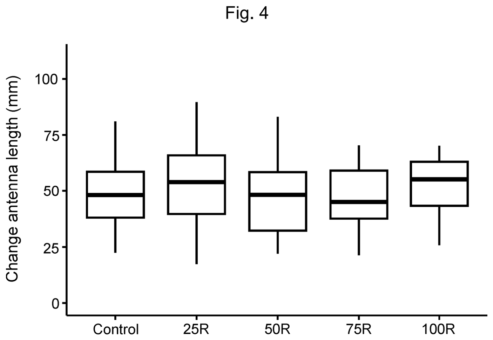

The results of the analyses show that all exemplary experimental BSFL meal feeds according to the invention led to comparably high survival rates, as well as final body weights and weight gains (Table 8). The results for final weight and weight gain were not significantly different between experimental and control feeds. In addition, analyses of the welfare parameter "change in antenna length" also showed no significant differences between treatment and control groups (Fig. 4).

Table 8: Survival and growth parameters of Pacific white shrimp (PWS) reared on experimental pelleted feeds replacing 25-100% w/w of non-sustainable fishmeal and 12-56% w/w of palm oil with meal from BSF reared on the plant by-product depectinized apple pomace. Feed names refer to the fishmeal replacement rate (R) (25-100% w/w).

| Parameter | Control feed | Feed 25R | Feed 50R | Feed 75R | Feed 100R |
|---|---|---|---|---|---|
| Survival rate (%) | 100 | 95.4 | 90.9 | 100 | 90.9 |
| Final weight (g) | 1.44 ± 0.86 | 1.54 ± 0.57 | 1.42 ± 0.43 | 1.54 ± 0.58 | 1.44 ± 0.43 |
| Weight gain (%) | 243 ± 175 | 181 ± 106 | 187 ± 77 | 195 ± 131 | 215 ± 142 |

This indicates that our experimental feeds, produced as examples according to the invention, in which we replaced 25-100% w/w of non-sustainable fishmeal and 12-56% w/w of palm oil with meal from BSF reared on the plant by-product depectinized apple pomace are excellent feeds for PWS aquaculture.

**EP 4 781 837 A1**

*Review of nutritional requirements of relevant aquaculture species and possible combination of BSF meals derived from our plant by-products*

The ingredients in commercially available pelleted feeds for different aquaculture species vary depending on the general feeding ecology and the specific needs of each species. Carnivorous species (e.g., salmon, trout, sturgeon) and omnivorous species (e.g., shrimp, catfish, common carp) have medium to high protein and fat requirements. Their feeds often contain high levels of fishmeal and fish oil. Herbivorous species (e.g., white amur, mullet - which are beyond the scope of this invention) have lower protein requirements and can utilize more vegetable ingredients such as soybean meal, corn and wheat. As a result, many commercial feeds for species within an ecological feeding group use common ingredients, with the proportions of ingredients carefully matched to the specific nutritional requirements of each aquaculture species. According to the state of the art as is known heretofore, it is strenuous and costly to produce feeds that specifically meet the individual needs (e.g., fat and protein content) of a chosen species to be raised in aquaculture because of the need to use several different fat and protein sources, including unsustainable fismeal. The invention, disclosed herein, provides a very versatile and cost-effective way of producing such species-specific feeds for aquaculture, as only one main protein and fat source is needed, i.e., BSFL meal, which is readily available in different compositions regarding fat and protein content.

The nutritional requirements (protein and fat content) for commercial aquaculture feeds for selected species (i.e., carnivorous and omnivorous species that naturally feed on arthropods) of the families Penaeidae, Salmonidae, Cyprinidae, Scophthalmidae, Sparidae, Sciaenidae, Acipenseriformes, Clariidae, and Moronidae are presented in Table 9. Thus, it is obvious to any person of ordinary skill in the art that the surprising experimental findings, elaborated herein using PWS as an example are analogously applicable to these other carnivorous and omnivorous aquaculture species because of their similar wild type diet, i.e., arthropods and/or other invertebrates.

Table 9: Nutritional requirements for grower feeds of selected aquaculture species according to FAO. *Recommended by producers of species-specific compound feeds, **according to well known state of the art.

| Family/species | Crude fat (% w/w) | Crude protein (% w/w) |
|---|---|---|
| Penaeid shrimp (Penaeidae) | | |
| Pacific white shrimp (*Penaeus vannamei*) | 7* | 36* |
| Black tiger shrimp (*Penaeus monodon*) | 3.5-8.0 | 35-42 |
| Indian white shrimp (*Penaeus indicus*) | 6-9 | 30-43 |
| Kuruma prawn (*Penaeus japonicus*) | 4-6** | 52-60** |
| Salmonids (Salmonidae) | | |
| Atlantic salmon (*Salmo salar*) | 20-24 | 42-45 |
| Rainbow trout (*Oncorhynchus mykiss*) | 21** | 42 |
| Carps (Cyprinidae) | | |
| Common carp (*Cyprinus carpio* s.l.) | 4.6 | 34-37 |
| Flatfish (Scophthalmidae) | | |
| Turbot (*Scophthalmus maximus*) | 11** | 47-51** |
| Seabreams (Sparidae) | | |
| Gilthead seabream (*Sparus aurata*) | 12-25 | 45-50 |
| Croakers (Sciaenidae) | | |
| Meagre (*Argyrosomus regius*) | 15-16** | 48-50** |
| Sturgeons (Acipenseridae) | | |
| Sturgeon (*Acipenser* spp.) | 12-14* | 40-42* |
| Airbreathing catfish (Clariidae) | | |
| North African catfish (*Clarias gariepinus*) | 10-17 | 40-43 |
| Temperate basses (Moronidae) | | |
| European seabass (*Dicentrarchus labrax*) | 21-22 | 45-50 |

For most aquaculture species and according to the state of the art known heretofore, only about 70-85% w/w of the pelleted aquaculture feed can consist of insect meal (the remaining 15-30% w/w consists of carbohydrates, binders, amino acids, essential fatty acids, etc.). These 70-85% w/w would have to provide all the fat and protein requirements of the aquaculture species if 100% w/w of the unsustainable fat and protein sources in commercial aquaculture feeds were replaced with BSF-meal components.

16

In order to calculate the optimal proportion of the 3 BSFL meal types based on plant by-products for a species- and life-stage specific feed, the following calculation can be used.

Let:

- x = Proportion of BSFL meal based on by-product A ($0 \leq x \leq 1$)

- y = Proportion of BSFL meal based on by-product B ($0 \leq y \leq 1$)

- z = Proportion of BSFL meal based on by-product C ($0 \leq z \leq 1$)

- pA, pB, pC = Protein content of BSFL meals based on by-product A, B, and C respectively (as a decimal)

- fA, fB, fC = Fat content of BSFL meal based on by-product A, B, and C respectively (as a decimal)

- pTarget = Desired protein content of the aquaculture feed (as a decimal)

- fTarget = Desired fat content of the aquaculture feed (as a decimal)

Then, the system of equations is:

1. **Protein Balance:**

$$pA * x + pB * y + pC * z = pTarget \qquad (i)$$

2. **Fat Balance:**

$$fA * x + fB * y + fC * z = fTarget \qquad (ii)$$

3. **Total Proportion:**

$$x + y + z = 1 \qquad (iii)$$

This system can be solved using various methods like substitution, elimination, or matrix methods to find the values of x, y, and z, which represent the optimal proportions of each BSFL meal type based on plant by-products for a species- and life stage-specific aquaculture feed. All these methods are well known to any person of ordinary skill in the art.

Examples of species- and life-stage specific mixtures of three BSFL meal types, where BSFL were reared on cocoa bean shells, depectinized apple pomace or potato peelings, for selected crustacean and fish aquaculture species in the grower life stage are shown in Table 10. To explore a range of target values, solver tools (e.g., Excel Solver, Microsoft, Redmond, USA) could be used.

Table 10: Exemplary mixtures of BSFL meal types (for which BSFL were reared on cocoa bean shells, depectinized apple pomace, or potato peelings) for grower feeds of selected aquaculture species, calculated using a system of linear equations. For simplicity, the lowest recommended dietary requirements for protein and fat (see Table 9) have been used for the calculation. *Exact species identification is difficult due to widespread interspecific hybridization and the fact that fertile sturgeon hybrids are often used in aquaculture.

| Species | Target values in % w/w | | Optimal proportion of 3 BSFL meal types in % w/w | | |
| --- | --- | --- | --- | --- | --- |
| | Fat content | Protein content | "Cocoa bean shells" | "Apple pomace" | "Potato peelings" |
| *Penaeus vannamei* | 7 | 36 | 19 | 52 | 29 |
| *Penaeus monodon* | 4 | 35 | 16 | 58 | 26 |
| *Penaeus indicus* | 6 | 30 | 7 | 66 | 27 |
| *Penaeus japonicus* | 4 | 52 | 0 | 41 | 59 |
| *Salmo salar* | 20 | 42 | 43 | 39 | 18 |
| *Oncorhynchus mykiss* | 21 | 42 | 43 | 39 | 18 |
| *Cyprinus carpio* s.l. | 5 | 34 | 12 | 64 | 24 |

(continued)

| Species | Target values in % w/w | | Optimal proportion of 3 BSFL meal types in % w/w | | |
|---|---|---|---|---|---|
| | Fat content | Protein content | "Cocoa bean shells" | "Apple pomace" | "Potato peelings" |
| *Scophthalmus maximus* | 11 | 47 | 53 | 42 | 5 |
| *Sparus aurata* | 12 | 45 | 41 | 43 | 16 |
| *Argyrosomus regius* | 15 | 48 | 36 | 4 | 60 |
| *Acipenser* spp.* | 12 | 40 | 25 | 17 | 58 |
| *Clarias gariepinus* | 10 | 40 | 19 | 25 | 56 |
| *Dicentrarchus labrax* | 21 | 45 | 59 | 6 | 35 |

Turbot, gilthead seabream, meagre, and Kuruma prawn have relatively high protein requirements (see Tables 9 and 10) that may not be fully met by the use of BSFL meals.

In this case, our BSFL meals can be protein-concentrated, for example by defatting, to fully meet the protein requirements of these aquaculture feeds through the use of BSFL meals. Alternatively, other protein sources such as pea protein could be added. The same may apply to the starter feeds for other aquaculture species, as starter feeds are typically formulated with higher protein contents than grower feeds.

However, regardless of any protein enrichment described in the previous paragraph, 50-100% w/w of the dietary protein and fat requirements for all species listed in Tables 9 and 10 and for all their life stages can be met by BSFL meals. Thus, our insect meal feeds based on plant by-products provides a complete replacement for fishmeal and other unsustainable protein and fat components in commercial feeds for many aquaculture fish and crustacean species.

Further extensive feeding experiments have additionally been performed and demonstrate that this principle generally applies to numerous plant by-products, which can be used as feed for BSF larvae. The additionally tested samples of plant by-products (Table 11) are covering a broad spectrum of different types of plant by-products, so that it can well be concluded that this principle even applies to all plant by-products that can be used for feeding of BSF larvae. These materials are massively available globally and were previously mostly discarded or burned. Therefore, their usage for breeding BSF larvae to acquire various types of BSF-meal in order to produce insect feed with customized nutrient profiles for different aquaculture species, makes aquaculture more sustainable and economical.

Table 11: Further new agricultural by-products tested as BSF larvae substrate

| By-Product | Source | Global Availability |
|---|---|---|
| **Empty Fruit Bunches (EFB)** | Palm oil production | 13-15 Million tonnes/year |
| **Palm Kernel Meal (PKM)** | Oil extraction from coconut/palm | 6-7 Million tonnes/year |
| **Cottonseed Press Cake (CPC)** | Oil extraction from cotton seeds | 7-8 Million tonnes/year |
| **Rapeseed Press Cake (RPC)** | Oil extraction from rapeseed | 25-30 Million tonnes/year |

The exemplarily applied BSFL Rearing Conditions are:

- Containers: Polypropylene boxes
- Temperature: 27 ± 1°C (constant)
- Humidity: 65 ± 5%
- Light conditions: Complete darkness
- Larval age: 5th instar (ready to pupate)
- Starting weight: 5-7 mg per larva

Which nutrients remained in the BSF larvae after feeding is examined by the following methods:

- Protein: Kjeldahl method (standard food analytics)

- Fat: Weibull-Stoldt extraction with hexane

- Dry matter: Thermogravimetry

- Ash/Minerals: Incineration in muffle furnace

All analyses are performed on freeze-dried and ground samples according to well known proceedings of the current state of the art. The main results of the experiments are recorded in Tables 12 through 14.

Table 12: Nutrient content of feed substrates

| By-Product | Raw Protein (% w/w dry matter) | Raw Fat (% w/w dry matter) |
|---|---|---|
| Empty Fruit Bunches (EFB) | 5.9 ± 0.2 | 7.6 ± 0.2 |
| Palm Kernel Meal (PKM) | 13.6 ± 0.1 | 10.4 ± 0.7 |
| Cottonseed Press Cake (CPC) | 26.2 ± 0.7 | 8.7 ± 0.5 |
| Rapeseed Press Cake (RPC) | 20.9 ± 0.2 | 17.2 ± 0.4 |

As can be seen regarding the choice of the substrates being selected for the further exemplary feeding tests of BSF larvae (Table 12), they differ significantly in protein content (5.9-26.2%). This is intentional in order to further verify that these differences of protein content of the plant by-products transfer to the composition of the BSF larvae. The further plant by-products are also chosen with repect to different regional occurrence, thus showing that the method can be applied in various climate zones.

The experimental results of the exemplary growth tests of BSF larvae with different substrates are shown in Tables 13 and 14. The data provided in Table 13 shows that development time of the BSF larvae varies by a factor of 7 (21 to 151 days) depending on what is fed, and the final weight also varies with the substrate:

- Usage of PKM (Palm Kernel Meal) shows best results - larvae grow fast (24 days) and reach highest weight (244 mg).
- Usage of RPC (Rapeseed Press Cake) shows fastest development (21 days), in combination with excellent growth (208 mg).
- Usage of CPC (Cottonseed Press Cake): provides intermediate results (156 mg, 24 days).
- Usage of EFB (Fruit Bunches) shows slow growth (151 days), but is highly sustainable since traditional burning of EFB causes significant environmental problems.

The additionally performed further experiments (results provided in Tables 11 through 14) show: Depending on what the BSF larvae are fed, they acquire different nutrients. The protein content ranges from 38.4% w/w to 55.1% w/w, providing a difference of 16.7 percentage points. The fat content ranges from 23.2% w/w to 26.0% w/w, which is relatively stable, but still commercially relevant for aquaculture feeds.

Table 13: BSF larvae development and growth

| By-Product | Final Weight (mg/larva) | Development Time (days) |
|---|---|---|
| Empty Fruit Bunches (EFB) | 125.1 ± 8.1 | 151.3 ± 0.5 |
| Palm Kernel Meal (PKM) | 244.3 ± 3.9 | 24.0 ± 0.0 |
| Cottonseed Press Cake (CPC) | 155.3 ± 16.1 | 23.7 ± 0.5 |
| Rapeseed Press Cake (RPC) | 207.9 ± 40.4 | 21.0 ± 0.0 |

Table 14: Nutrients in the BSF larvae grown on the different substrates listed in Table 12

| By-Product | Raw Protein in BSFL (% w/w dry matter) | Raw Fat in BSFL (% w/w dry matter) |
|---|---|---|
| Empty Fruit Bunches (EFB) | 38.4 ± 3.3 | 26.0 ± 0.7 |
| Palm Kernel Meal (PKM) | 48.1 ± 0.9 | 23.2 ± 1.9 |
| Cottonseed Press Cake (CPC) | 50.0 ± 0.1 | 23.3 ± 1.2 |
| Rapeseed Press Cake (RPC) | 55.1 ± 0.6 | 25.1 ± 0.8 |

**Description of the drawings**

Fig. 1: Growth curves (A), larval development time (B), final larval weight (C), and specific growth rate (D) of BSFL reared on three plant by-products (CBS: cocoa bean shells, DAP: depectinized apple pomace, PP: potato peelings) and a grain-based control feed (CF). Different letters within Fig. 1 (a-d) indicate statistically significant differences ($p < 0.05$; one-way ANOVA or Welch's ANOVA). Data for (B-D) are presented as box-and-whisker plots. Lines indicate medians and boxes first and third quartiles.

Fig. 2: Exemplary growth characteristics of PWS (A: survival rate, B: final weight, C: weight gain, D: specific growth rate) fed a diet containing BSFL reared on three plant by-products (CBS: cocoa bean shells, DAP: depectinized apple pomace, PP: potato peelings) or a grain-based control feed (CF). There were no significant differences between treatment and control groups ($p < 0.05$; Kaplan Meier (survival), one-way ANOVA or Welch's ANOVA). Data are presented as box-and-whisker plots. Lines indicate medians and boxes first and third quartiles.

Fig. 3: Examples of pelletized special feed for aquaculture of shrimp being composed of up to 100 % BSF meal. The BSF were fed with the side stream depectinized apple pomace.

Fig. 4: Exemplarily detected changes in antenna length of PWS reared on experimental pelleted feeds according to the invention in which 25-100% w/w of non-sustainable fishmeal and 12-56% w/w of palm oil were replaced with meal from BSF reared on the plant by-product apple pomace. Feed names refer to the fishmeal replacement rate (R) (25-100% w/w).

**Claims**

1. Method for producing pelleted feed for aquaculture species, comprising the following steps,

a1) providing *Hermetia* larvae within an apparatus, the apparatus being suitable for rearing *Hermetia* larvae;
a2) rearing the *Hermetia* larvae being provided according to step a1) until they are ready for harvesting, whereat the *Hermetia* larvae are fed with a plant-based feed, whereat the plant-based feed comprises a plant by-product, whereat the plant by-product is being selected from the list of plant by-products comprising cocoa bean shells, apple pomace, depectinized apple pomace, potato peelings, empty fruit bunches, palm kernel meal, cottonseed press cake, rapeseed press cake;
a3) harvesting the *Hermetia* larvae being reared according to step a2), for example by manually collecting, sieving or automatically collecting the *Hermetia* larvae, so that *Hermetia* larvae are obtained;
a4) processing the *Hermetia* larvae being obtained according to step a3) to meal of *Hermetia* larvae, the processing comprising for example drying, grinding, defatting, so that meal of *Hermetia* larvae is obtained;
b1) providing one or more further ingredients, the one or more further ingredients comprising binder ingredients and/or feed additives;
b2) mixing the further ingredients provided according to step b1) with the meal of *Hermetia* larvae obtained according to step a4), so that a mixture is obtained;
b3) further processing the mixture obtained according to step b2), so that pelleted feed for aquaculture species is obtained, whereat the further processing comprises steps, being independently selected from the list of process steps comprising heating, cooling, freezing, grinding, moistening, extruding, drying, mixing, pelletizing, coating, quality-testing, whereat some steps can be performed in different sequence with respect to each other and/or can be performed more than one time.

2. Method for producing pelleted feed for aquaculture species according to claim 1, **characterized in that**

- the plant by-product applied within step a2) is cocoa bean shells and is enriched with methionine and/or lysine or
- the plant by-product applied within step a2) is potato peelings and is enriched with methionine and/or lysine.

3. Method for producing pelleted feed for aquaculture species according to claim 1, **characterized in that**

- the plant by-product applied within step a2) is apple pomace and is enriched with methionine and/or lysine or
- the plant by-product applied within step a2) is depectinized apple pomace and is enriched with methionine and/or lysine.

4. Method for producing pelleted feed for aquaculture species according to claim 1, **characterized in that** the processing according to step a4) comprises the following sub-steps,

i) separating the *Hermetia* larvae obtained according to step a3) from remaining plant by-product;
ii) killing the larvae, for example by blanching, freezing, or heating;
iii) drying the larvae to reduce the moisture content;

iv) grounding or milling the larvae into powder or meal;

v) measuring the content of fat and protein of the powder or meal, obtained according to step iv);

so that a meal is obtained that has a defined fat and protein content, being based upon the plant by-product used for rearing the *Hermetia* larvae and the processing according to steps i) through v).

5. Method for producing pelleted feed for aquaculture species according to claim 4, **characterized in that** it comprises an additional step vi), whereat additional step vi) is comprising defatting the meal obtained according to step v) at least partly so that the content of fat of the resulting meal is reduced and the content of protein is increased.

6. Method for producing pelleted feed for aquaculture species according to any one of previous claims 1 to 5, **characterized in that** within step b2) 2-4 additional *Hermetia* meals, each one

- originating from larvae having been reared by use of a different plant by-product, or
- having been defatted to a certain individual degree, therefore each one having a different fat and/or protein content,

are additionally admixed, so that a mixture is obtained meeting

- a certain individual dietary fat and/or protein requirement of a specific aquaculture species or
- a certain life-stage specific dietary fat and/or protein requirement of a certain specific aquaculture species.

7. Feed for aquaculture species, produced according to any one of the preceding claims 1 to 6, **characterized in that** the aquaculture species is selected from the list of species comprising shrimps (family Penaeidae), salmonids (Salmonidae), carps (Cyprinidae), flatfish (Scophthalmidae), seabreams (Sparidae), croakers (Sciaenidae), sturgeons (Acipenseridae), airbreathing catfish (Clariidae), and temperate basses (Moronidae).

8. Feed for aquaculture species according to claim 7, **characterized in that** at least one feed-additive is independently selected from the list of feed additives comprising essential fatty acids (e.g., omega-3 fatty acids, omega-6 fatty acids) or sources of essential fatty acids (e.g., microalgae, macroalgae, seaweed, seagrass, algae cake, fish oil), carbohydrate sources (e.g., cereal grains, wheat middlings), essential amino acids (e.g., methionine, lysine) or sources of essential amino acids (e.g., oilseed meal, brewer's spent grain), extra protein sources (e.g., plant products/proteins, single-cell products/proteins, sustainable fishmeal), lecithin as source of phospholipids, vitamins (e.g., vitamins A, B complex, C, D, E, K), minerals (e.g., dicalcium phosphate), gluten, natural pigments (e.g., astaxanthin, carotenoids), attractants (e.g., nucleotides, betaine, protein hydrolysates, yeast extracts), immunity-enhancing and health-promoting additives (e.g., antioxidants, prebiotics, probiotics, nucleotides, beta-glucans, enzymes, botanical extracts).

9. Feed for aquaculture species according to claim 7 or claim 8, **characterized in that** the at least one binder ingredient is independently selected from the list of binder ingredients comprising starches (e.g., corn starch, wheat starch, rice starch, tapioca starch, potato starch), gums (e.g., guar gum, xanthan gum, carrageenan), binder proteins (e.g., soy protein concentrate), brown seaweed alginates, cellulose derivatives, bentonite, lignosulfonates.

10. Feed for aquaculture species according to any one of the preceding claims 7 to 9, **characterized in that**

- the content of *Hermetia* meals is within the range of 20-100% w/w and/or
- the feed comprises 0-50% w/w of at least one feed-additive and/or
- the feed comprises 0-30% w/w of at least one binder ingredient

in such a way that the sum of all present components of the pelleted feed for aquaculture is 100% w/w, all values of percentage are being based on dry matter.

11. Usage of the feed for aquaculture species according to any one of claims 7 to 10 for the aquaculture of shrimps (family Penaeidae), salmonids (Salmonidae), carps (Cyprinidae), flatfish (Scophthalmidae), seabreams (Sparidae), croakers (Sciaenidae), sturgeons (Acipenseridae), airbreathing catfish (Clariidae), and temperate basses (Moronidae).

12. Usage of the feed for aquaculture species according to any one of claims 7 to 8 for the aquaculture of *Penaeus vannamei, Penaeus monodon, Penaeus indicus, Penaeus japonicus, Salmo salar, Oncorhynchus mykiss, Cyprinus*

*carpio* s.l., *Scophthalmus maximus, Sparus aurata, Argyrosomus regius, Acipenser* spp., *Clarias gariepinus,* and *Dicentrarchus labrax.*

13. Usage of the feed for aquaculture species according to any one of claims 7 to 8 for the aquaculture of shrimps (family *Penaeidae*).

14. Usage of the feed for aquaculture species according to any one of claims 7 to 8 for the aquaculture of Pacific white shrimp (*Penaeus vannamei*).

15. Usage of a meal of *Hermetia,* acquired according to step a4 of claim 1, or a mixture of meals of *Hermetia,* each one of the meals being acquired according to step a4 of claim 1, for replacing 75-100% w/w of the amount of fishmeal in conventional pelleted aquaculture feeds.

Fig. 1

Fig. 2

Fig. 3

Fig. 4

Europäisches
Patentamt

European
Patent Office

Office européen
des brevets

## EUROPEAN SEARCH REPORT

**Application Number**

EP 26 15 3731

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BARTH ANNALENA ET AL: "Broad acceptance of sustainable insect-based shrimp feeds requires reproducible and comparable research", AQUACULTURE INTERNATIONAL, SPRINGER NETHERLANDS, NL, vol. 33, no. 1, 1 January 2025 (2025-01-01), XP038023266, ISSN: 0967-6120, DOI: 10.1007/S10499-024-01769-W [retrieved on 2025-01-02] * page 4 - page 8; tables 1,2,4 * * page 16 - page 19 * ----- | 1-14 | INV. A23K10/20 A23K10/35 A23K10/37 A23K40/10 A23K40/25 A23K40/30 A23K50/80 |
| X | KUMAR KATYA ET AL: "Efficacy of insect larval meal to replace fish meal in juvenile barramundi, reared in freshwater", INTERNATIONAL AQUATIC RESEARCH, BIOMED CENTRAL LTD, LONDON, UK, vol. 9, no. 4, 15 September 2017 (2017-09-15), pages 303-312, XP021251442, ISSN: 2008-4935, DOI: 10.1007/S40071-017-0178-X * "Experimental design and diets"; table 1 * ----- -/-- | 7-10,15 | |

| | | | TECHNICAL FIELDS SEARCHED (IPC) |
|---|---|---|---|
| | | | A23K |

The present search report has been drawn up for all claims

| Place of search | Date of completion of the search | Examiner |
|---|---|---|
| The Hague | 15 May 2026 | Saettel, Damien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                   

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

Application Number

EP 26 15 3731

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XIAOPENG XIAO ET AL: "Effects of black soldier fly (Hermetia illucens) larvae meal protein as a fishmeal replacement on the growth and immune index of yellow catfish (Pelteobagrus fulvidraco)", AQUACULUTRE RESERCH, BLACKWELL SCIENCE, OXFORD, GB, vol. 49, no. 4, 19 January 2018 (2018-01-19), pages 1569-1577, XP072051228, ISSN: 1355-557X, DOI: 10.1111/ARE.13611 * table 2 * | 7-10,15 | |
| A | WO 2022/223703 A1 (UNIV YORK [GB]) 27 October 2022 (2022-10-27) * claims 1,12,13,18,19 * | 1-15 | |

TECHNICAL FIELDS
SEARCHED      (IPC)

The present search report has been drawn up for all claims

| Place of search | Date of completion of the search | Examiner |
|---|---|---|
| The Hague | 15 May 2026 | Saettel, Damien |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 26 15 3731

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2026

| Patent document cited in search report | Publication date | Patent family member(s) | Publication date |
|---|---|---|---|
| WO 2022223703 A1 | 27-10-2022 | CA 3216003 A1 | 27-10-2022 |
| | | EP 4326847 A1 | 28-02-2024 |
| | | US 2024358043 A1 | 31-10-2024 |
| | | WO 2022223703 A1 | 27-10-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. BARTH et al.** Broad acceptance of sustainable insect-based shrimp feeds requires reproducible and comparable research. *Aquaculture Inernational*, 2025, vol. 33, 101
- **KUMAR KATYA et al.** Efficacy of insect larval meal to replace fish meal in juvenile barramundi Lates calcarifer, reared in freshwater. *Int. Aquat. Res.*, 2017, vol. 9, 303-312

- **XIAOPENG XIAO et al.** Effects of black soldier fly (Hermetia illucens) larvae meal protein as a fishmeal replacement on the growth and immune index of yellow catfish (Pelteobagrus fulvidraco. *Aquaculture Research*, 2018, vol. 49, 1569-1577